# EUROPEAN PATENT APPLICATION

(11) **EP 1 780 004 A1**
(43) Date of publication of application: **02.05.2007**
(21) Application number: 06380193.0
(22) Date of filing: 10.07.2006
(51) Int. Cl.: B32B 7/12, B32B 27/34, B32B 27/32, A43B 7/32

(54) **Anti-perforation fabric**

(30) Priority: 27.10.2005 ES 200502619; 21.03.2006 ES 200600715
(71) Applicant: Main Style, S.L., 26580 Arnedo (La Rioja) (ES)
(72) Inventor: Moron Rubio, José Antonio, 26580 Arnedo (La Rioja) (ES)
(74) Representative: Maldonado Jordan, Julia

(57) **Abstract**

The invention relates to a structure made of a plurality of polyester and/or polyamide fabric layers (1) fixed to each other forming a sandwich with the collaboration of intermediate layers (2) made of latex, EVA or polyurethane, the joining of these elements being carried out by means of applying heat and pressure. In this way, a fabric with a high degree of resistance to perforation is obtained which however maintains good flexibility and is susceptible of being cut, sewn or adhered and can be integrated as an insert in other processes such as vulcanization, blowing etc.

## Description

### Object of the Invention

The present invention relates to a fabric which has been especially conceived and structured in order to achieve a high degree of resistance for the same, therefore it is suitable in applications related with the field of safety.

The fabric is especially suitable to be used as an insole in the field of footwear, specifically of safety footwear, when there is risk of the sole of the footwear being traversed by foreign elements such as spikes, nails, splinters etc, in certain work conditions.

Therefore, the invention is applicable in the general field of safety both in jobs in which there is a risk of accidents after nailing or impact and in other fields in which there is a risk of receiving projectile impacts or the like.

### Background of the Invention

The classic solution to the aforementioned perforation drawbacks consists of the arrangement of generally laminar metallic elements, in some cases one-piece and in others made of duly inter-related sheets, generally covered in order to conceal their presence. This classic solution has drawbacks affecting varied aspects such as assembly complexity, difficult adaptation to the surface to be protected, high weight, etc.

In order to solve this drawback, anti-perforation fabrics made of aramids, such as Kevlar for example, have long been used, such that the fabrics act as a support for the aramids which are what really generate the barrier effect, either adhered to the fabrics or forming a sandwich with the latter.

These fabrics are also expensive due to the materials participating in them same and due to their manufacturing complexity and have a degree of adaptability which still leaves a lot to be desired.

There are other solutions in which different materials with also different features are combined and which are even further away from the aims sought in this scope, product simplicity, low cost and easy application.

### Description of the Invention

The anti-perforation fabric proposed by the invention is a considerable technological advancement in this field, more specifically it is a low cost, greatly simple solution that is easy to adapt to any surface to be protected, very useful and simple in its application, and it further allows the integral use of the product.

To that end and more specifically, the anti-perforation fabric proposed by the invention is formed from a plurality of polyester fabric layers joined to each other by means of intermediate layers made of latex, EVA or polyurethane acting as a binder or adhesive for the fabric layers.

Said polyester fabric layers have a thickness comprised between 0.6 and 0.8 mm, the fixing thereof is carried out at a temperature comprised between 140 and 160°C and with a pressure comprised in turn between 8 and 12 kilos.

In the preferred scope of application of the invention, obtaining safety insoles for footwear, five or six polyester fabric layers are used in the sandwich forming said insole in order to obtain a sandwich with a thickness comprised between 3.7 and 4 mm offering resistance to perforation of the order of 110 kilos.

According to an embodiment variant of the invention, the polyester fabric layers can be substituted by polyamide fabric layers, improving the results even more.

Nevertheless, it has been decided to maintain polyester as the raw material in the fabric, combining it with polyamide, either in alternating layers of both materials or by means of layers in which one material is woven with the other, or even by means of layers using filaments made of a mixture of polyester and polyamide.

In any case, the different fabric layers are still fixed to each other in the same way by means of intermediate layers of latex, EVA or polyurethane and with the mentioned temperature and pressure.

### Description of the Drawings

In order to complement the description which is being made and for the purpose of aiding in a better understanding of the features of the invention, according to a preferred practical embodiment thereof, a set of drawings is enclosed as an integral part of said description in which the following has been represented with an illustrative and non-limiting character:
Figure 1 shows a schematic sectional view of a portion of anti-perforation fabric made according to the object of this invention.
Figure 2 shows a detail of the distribution of the fibers between the different fabric layers due to the effect of the pressure supplied to the sandwich during the curing of the latex or joining element between the polyester fabric layers used.

### Preferred embodiment of the Invention

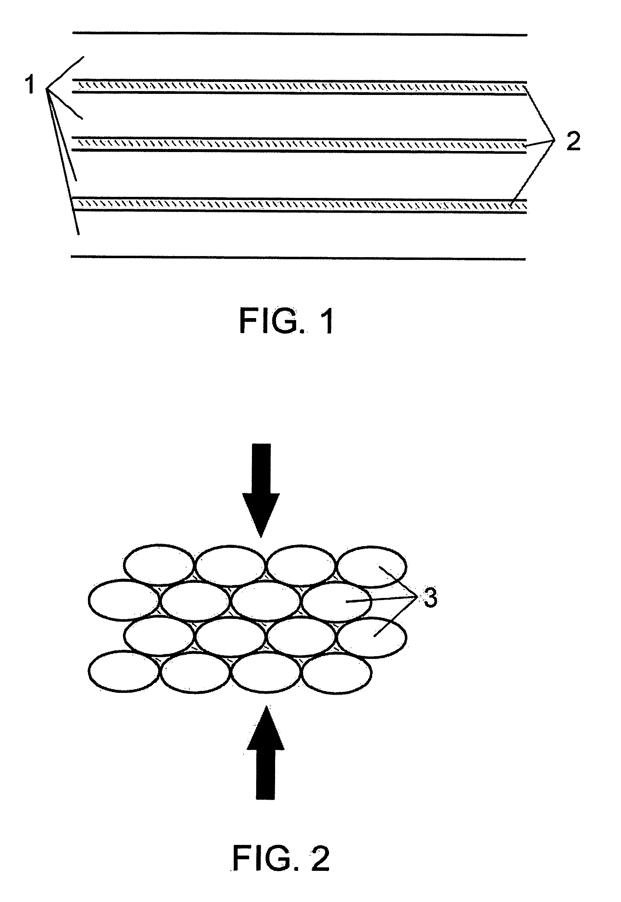

As has been said previously, Figure 1 schematically shows a sectional detail of the proposed fabric and it can be observed that a plurality of layers (1) participate in said fabric, in this case five polyester fabric layers, between which layers (2) of latex, EVA, polyurethane or any other similar product that can act as a joining link between the fabric layers (1) are arranged as a joining means between the layers when heat and pressure are applied to the set.

Obviously, the number of polyester fabric layers (1) used will vary according to the resistance to perforation sought because, logically, the greater the number of layers participating in the fabric the higher the resistance to penetration.

The mentioned polyester fabric layers (1) have a thickness comprised between 0.6 and 0.8 mm and independently of the number of layers (1) participating in the anti-perforation fabric and also independently of whether latex (2), EVA or polyurethane is used as the joining means between said layers, the fixing of said layers (1) will preferably be carried out at a temperature of the order of 150°C and with a pressure of the order of 10 kg per square centimeter in both sides of the fabric.

This pressure will give rise to a redistribution of the filaments (3) participating in the polyester fabric layers (1) such that said fibers will tend to occupy all the empty spaces, making the final fabric more compact and consequently with a higher degree of resistance to penetration, without its flexibility being reduced in any way, as can be observed in Figure 2.

In the tests carried out with five polyester fabric layers (1) joined by means of latex and with a thickness per layer of 0.6 mm, resistance to perforation greater than 110 kg per square centimetre is achieved, these results being optimum for the aforementioned application to insoles for safety footwear.

According to a second embodiment of the invention, in which polyester is substituted by or combined with polyamide using four and eight fabric layers, a sandwich of a thickness comprised between 2.5 and 6 mm is obtained by varying the number of layers according to the resistance to perforation desired, as in the previous case.

All these layers can be obtained made of polyamide fabric or some can be made of polyamide and others of polyester in any relative proportion.

As has been said previously, all or part of said layers can be obtained by means of fabrics in which conveniently woven polyamide threads and polyester threads or even threads forming the fabric of a certain layer or of all the layers participate, they can be identical to each other and can be obtained from a mixture of polyester and polyamide in any proportion considered to be appropriate depending on the results to be obtained, always taking into account that polyamide has a higher cost than polyester and therefore, proportions of these materials must be worked with in order to achieve the best quality-price ratio depending on the features sought for the anti-perforation fabric to be obtained.

As in the previous case, independently of the percentage and the way in which polyester and polyamide participate in the fabric layers, these are fixed to each other to form the resulting sandwich, using to that end latex, EVA or polyurethane as a joining means, said fixing being carried out with the cited temperature of the order of 150°C and with an also cited pressure of the order of 10 kg/cm² in both sides of the fabric.

In addition to the aforementioned flexibility features, the material formed as a sandwich is susceptible of being cut in a press to adopt any desired shape, it can be adhered to other surfaces, or it can also be sewn, and it can equally be integrated as an insert in other processes such as vulcanization, injection, blowing etc, and has a substantially lower specific weight than other conventional anti-perforation products.

## Claims

1. An anti-perforation fabric, especially applicable to the manufacture of insoles for safety footwear but equally applicable to any other practical element requiring a perforation barrier, **characterized in that** it is formed from a plurality of polyester and/or polyamide fabric layers fixed to each other with the collaboration of an intermediate joining element made of latex, EVA or polyurethane, forming a sandwich of variable number of layers depending on the degree of resistance to perforation sought, and the fixing being carried out by means of the curing of the latex, EVA or polyurethane by means of applying heat and pressure.

2. An anti-perforation fabric according to claim 1, **characterized in that** a plurality of polyester fabric layers alternated with another plurality of polyamide fabric layers is arranged therein.

3. An anti-perforation fabric according to claim 1, **characterized in that** polyester filaments and polyamide filaments participate in any relative proportion in each fabric layer.

4. An anti-perforation fabric according to claim 1, **characterized in that** the fabric layers are obtained made of threads in which polyester and polyamide are mixed in any proportion.

5. An anti-perforation fabric according to the previous claims, **characterized in that** the polyester and/or polyamide fabric layers have a thickness comprised between 0.6 and 0.8 millimetres, and their fixing is carried out at a temperature comprised between 140° and 160°C and with a pressure comprised in turn between 8 and 12 kg/cm².
